# FASCICULE DE BREVET EUROPEEN

(11) **EP 3 041 885 B1**
(45) Date de publication et mention de la délivrance du brevet: **03.01.2018**
(21) Numéro de dépôt: 14786986.1
(22) Date de dépôt: 29.08.2014
(51) Int. Cl.: C08G 69/00, G11B 9/00, G09C 5/00, H04K 1/00

(54) **PROCÉDÉ DE SYNTHÈSE SEQUENTIELLE DE POLY (ALCOXYAMINE AMIDE)S, COPOLYMÈRES OBTENUS À PARTIR DUDIT PROCÉDÉ ET LEURS UTILISATIONS**
VERFAHREN ZUR SEQUENZIELLEN SYNTHESE VON POLY(ALKOXYAMINAMID)EN, COPOLYMERE UND VERWENDUNGEN DAVON
METHOD FOR SEQUENTIALLY SYNTHESISING POLY(ALKOXYAMINE AMIDE)S, COPOLYMERS OBTAINED AND USES THEREOF

(30) Priorité: 05.09.2013 FR 1358517
(43) Date de publication de la demande: 13.07.2016
(73) Titulaire: Centre National De La Recherche Scientifique (Etablissement Public à Caractère Scientifique, Culturel et Professionnel), 75016 Paris (FR)
(72) Inventeur: LUTZ, Jean-François, 77694 Kehl (DE); MESZYNSKA, Anna, 34346 Hann. Münden (DE)
(74) Mandataire: Nuss, Laurent
(86) Numéro de dépôt international: PCT/FR2014/052147
(87) Numéro de publication internationale: WO 2015/033045

(56) Documents cités:
- HIDEYUKI OTSUKA: "Reorganization of polymer structures based on dynamic covalent chemistry: polymer reactions by dynamic covalent exchanges of alkoxyamine units", POLYMER JOURNAL, vol. 45, no. 9, 6 mars 2013 (2013-03-06), pages 879-891, XP055126221, ISSN: 0032-3896, DOI: 10.1038/pj.2013.17
- OTSUKA H ET AL: "A dynamic (reversible) covalent polymer: radical crossover behaviour of TEMPO-containing poly(alkoxyamine ester)s", CHEMICAL COMMUNICATIONS; [6015D], ROYAL SOCIETY OF CHEMISTRY, GB, 28 octobre 2002 (2002-10-28), pages 2838-2839, XP002270860, ISSN: 1359-7345, DOI: 10.1039/B209193C
- YUJI HIGAKI ET AL: "Polyurethane Macroinitiator for Controlled Monomer Insertion of Styrene", MACROMOLECULES, vol. 36, no. 5, 12 février 2003 (2003-02-12), pages 1494-1499, XP055126207, ISSN: 0024-9297, DOI: 10.1021/ma021091i

## Description

La présente invention concerne le domaine de la synthèse de polymères et plus particulièrement celui de la synthèse de polymères possédant des séquences contrôlées de monomères et l'utilisation de tels polymères, en particulier à des fins d'encodage ou de cryptage de données.

En effet, un but des synthèses de polymères possédant des séquences contrôlées peut être celui d'agencer, dans un ordre précis, deux monomères ou plus afin de créer un code moléculaire sur une chaîne macromoléculaire. Idéalement, ce code pourrait également être effacé à l'aide d'un procédé physique ou chimique facile à mettre en oeuvre.

Il a été montré par Merrifield que des polypeptides monodisperses possédant des séquences contrôlées de monomères peuvent être synthétisés sur un support solide (cf. Merrifield, J. Am. Chem. Soc., 85, 2149 1963). Cette technique a été par la suite étendue à la synthèse d'autres polymères à séquences contrôlées (par exemple des oligonucléotides, des oligoamides, des oligoesters, ou des oligouréthanes). Toutefois, ces synthèses sont souvent longues et fastidieuses car elles font appel à des chimies de protection et de déprotection permettant de désactiver momentanément des fonctions réactives.

Il a été montré que l'utilisation successive de deux réactions chimiosélectives différentes permet de synthétiser des polymères à séquences contrôlées sur un support sans avoir recours à des chimies de protection et de déprotection (cf. Lutz, J. Am. Chem. Soc., 131, 9195, 2009). Par exemple, des poly(triazole amide)s monodisperses peuvent être facilement synthétisés par cette approche. Toutefois, les réactions chimiques utilisées dans ce procédé restent assez lentes puisque plusieurs heures sont parfois nécessaires pour attacher une unité monomère sur le support. Un procédé plus rapide, durant par exemple moins d'une heure par étape d'ajout d'une unité de monomère, serait préférable. De surcroît, les polymères obtenus via ce procédé sont relativement stables thermiquement et chimiquement et ne peuvent donc pas être dégradés (c'est-à-dire effacés dans le cadre d'un procédé de codage/décodage) dans des conditions expérimentales douces.

Dans ce contexte, la présente invention a pour objet de proposer un procédé de synthèse de poly(alcoxyamine amide)s monodisperses possédant des séquences contrôlées de monomères qui pallie au moins certains des inconvénients précités.

Elle a également pour objet le poly(alcoxyamine amide) obtenu ou susceptible d'être obtenu par le procédé selon l'invention et l'utilisation du procédé selon l'invention pour la synthèse d'un polymère destiné à représenter un message codé ou de stockage d'informations dans lequel les différents monomères correspondent à un élément prédéfini dudit code ou des informations à stocker, par exemple un code binaire du type (0, 1), un code multi-naire, une lettre ou un signe du type alphanumérique ou analogue.

Conformément à la présente invention, les polymères visés sont obtenus à l'aide de deux réactions chimiques chimiosélectives très rapides. Cette méthode de synthèse emploie deux types différents de monomères et est décrite, sur le schéma général simplifié, donné à titre d'exemple non limitatif, ci-dessous :

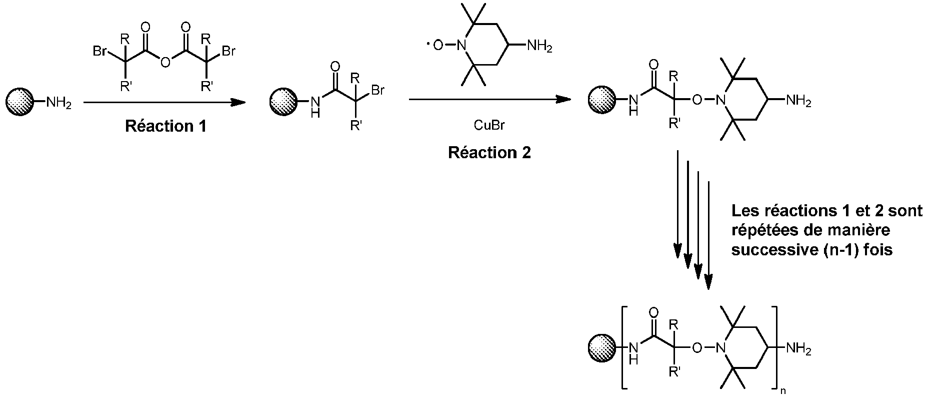

La première réaction fait, par exemple, intervenir une fonction amine primaire greffée sur un support adéquat (représenté ici de façon symbolique par une sphère) et un anhydride symétrique dihalogéné qui conduit, dans les conditions choisies, à la formation d'une liaison amide (Réaction 1).

La seconde réaction fait intervenir un radical stable de type nitroxyde que l'on fait réagir sur l'halogénure d'alkyle précédemment obtenu en présence d'un catalyseur métallique ou organométallique adapté (Réaction 2). Cette réaction de couplage radicalaire conduit à la formation d'une liaison alcoxyamine. Cette réaction a été utilisée pour la synthèse d'alcoxyamines de faible masse molaire (cf. Matyjaszewski, Macromolecules, 31, 5955, 1998) et pour la synthèse de différentes architectures macromoléculaires (cf. Hu, Polym. Chem., 4, 2384, 2013).

Par contre, cette réaction n'a pas été étudiée pour la synthèse supportée de polymères monodisperses possédant des séquences contrôlées de monomères.

L'invention sera mieux comprise, grâce à la description ci-après, qui se rapporte à des modes de réalisation préférés, donnés à titre d'exemples non limitatifs, et expliqués avec référence au schéma susvisé et aux exemples non limitatifs ci-après.

La présente invention a donc pour objet un procédé de synthèse de copolymères ou macromolécules synthétiques de type poly(alcoxyamine amide) dont la nature des monomères et la longueur des séquences de monomères sont contrôlées, dont la chaîne de monomères présente au moins une liaison entre monomères qui soit thermolabile et dont la ou les températures de dissociation sont toutes supérieures à 30 °C, de préférence, supérieures à 50 °C et plus préférentiellement supérieures à 60 °C mais toujours inférieures à 150 °C, de préférence toujours inférieures à 130 °C, caractérisé en ce qu'il consiste à faire réagir, sur un support solide ou soluble, un monomère acide sous la forme d'un acide carboxylique monohalogéné de formule X-C(R,R')-Y-COOH avec un monomère amine présentant un groupement radicalaire nitroxyde >N-O^{•} terminal libre et un groupement amine primaire terminal libre -NH₂ ce, en effectuant deux réaction chimiques distinctes et chimiosélectives, l'une consistant à faire réagir les groupements -COOH et -NH₂ précités de manière à obtenir une liaison amide -NH-CO-Y-C(R, R')-, et l'autre consistant à faire réagir le radical -Y-C(R, R')^{•}, obtenu in situ grâce à un catalyseur adapté audit élément halogène X, avec ladite fonction nitroxyde >N-O^{•} afin d'obtenir une liaison de type alcoxyamine -Y-C(R, R')-O-N<, et répéter, de façon alternée, lesdites réactions chimiques précitées autant de fois que nécessaire, en présence de catalyseurs adaptés à ou aux éléments X, avec un nouveau monomère acide halogéné de formule X-C(R,R')-Y-COOH identique ou différent du ou des précédents monomères acides halogénés utilisés ou avec un nouveau monomère amine radicalaire présentant un groupement >N-O^{•} terminal libre et un groupement amine primaire terminal libre -NH₂ identique ou différent du ou des précédents monomères aminés radicalaires, ce jusqu'à l'obtention de la chaîne complète de copolymère voulue.

Avantageusement, le procédé selon l'invention est caractérisé en ce que l'on démarre la synthèse du copolymère sur un support solide ou soluble muni d'un groupement d'amorce, chimiquement réactif, capable de fixer le premier monomère acide ou amine précités, puis en ce que l'on greffe alternativement sur ledit premier monomère, au fur et à mesure, les monomères acides et amines complémentaires jusqu'à l'obtention du copolymère voulu, ledit support étant de préférence un polystyrène réticulé de type Merrifield ou une chaîne de polystyrène soluble.

Conformément à la présente invention, un support solide ou un support soluble peut être utilisé. Ce support contient une fonction d'amorçage qui peut être une amine primaire (comme montré sur le schéma ci-dessus), un halogénure d'alkyle, un acide carboxylique ou un nitroxyde.

Le procédé selon l'invention est donc caractérisé en ce que en ce que le support solide présente comme groupement d'amorce un groupement -NH₂, -Br, -Cl, -COOH ou un groupement radicalaire présentant un groupement >N-O^{•} terminal libre, -NH₂, -Br ou -Cl étant préférés.

Ensuite, les monomères sont attachés un par un au support afin de former un segment monodisperse. Suivant le type d'amorceur utilisé sur le support, la réaction 1 ou la réaction 2 est effectuée en premier. Par la suite, ces deux réactions sont répétées le nombre de fois souhaité de manière consécutive afin de former le polymère désiré. Entre chaque réaction, le support est séparé du milieu réactionnel afin d'éliminer les excès de réactifs et les produits de réaction solubles dans la phase liquide.

Différents types de monomères peuvent être utilisés dans ce procédé.

Le procédé selon l'invention est donc également, caractérisé en ce que pour l'acide carboxylique monohalogéné X-C(R,R')-Y-COOH utilisé, X est indépendamment Br ou Cl,
R étant choisi indépendamment dans le groupe formé par :
H, CH₃, un groupement alkyle présentant 2 à 6 atomes de carbone, éventuellement substitué ou polysubstitué ;
R' étant choisi indépendamment dans le groupe formé par :
   H, CH₃, un groupement alkyle présentant 2 à 6 atomes de carbone, éventuellement substitué ou polysubstitué ;
   et Y étant choisi indépendamment dans le groupe formé par :
      Ø (liaison covalente) et -COO-Z-, où Z est une chaîne hydrocarbonée de 1 à 15 atomes de carbone, linéaire, ramifiée ou cyclique, éventuellement substituée ou polysubstituée, notamment par des groupements choisis dans la liste formée par : -OH, -NH₂, -COOH, -CN, un groupement alcyne, en particulier -C=C-H, un groupement alcène, -N₃,-SO₃, ces groupements pouvant être protégés par un ou plusieurs groupements protecteurs adaptés.

En particulier, les substituants latéraux de ces monomères peuvent être variés afin de créer des codes moléculaires sur la chaîne polymère formée. Par exemple, l'anhydride de l'acide 2-bromoisobutyrique (**1**) et l'anhydride de l'acide 2-bromopropionique (**2**) peuvent être utilisés de manière interchangeable pour former un polymère possédant des séquences contrôlées de monomères avec, par exemple, le radical libre 4-amino 2,2,6,6-tétraméthylpipéridine-1-oxyl (**3**).

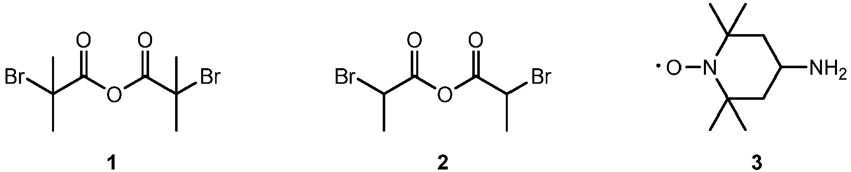

Les polymères formés contiennent des liaisons covalentes amides et alcoxyamines et sont donc nommés poly(alcoxyamine amide)s (**4**). Ces polymères sont monodisperses et possèdent des séquences contrôlées de monomères. De surcroît, les liaisons alcoxyamines qui constituent ces polymères sont thermolabiles et peuvent donc être facilement déstabilisées au-dessus d'une température critique modérée.

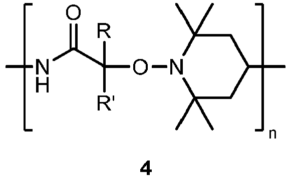

Le procédé selon l'invention est donc également caractérisé en ce que l'acide carboxylique monohalogéné X-C(R,R')-Y-COOH utilisé est obtenu in situ par dissociation, à partir de l'anhydride symétrique dihalogéné correspondant de formule X-C(R,R')-Y-CO-O-CO-Y-C(R,R')-X, de préférence à partir de l'anhydride de l'acide 2-bromoisobutyrique ou de l'anhydride de l'acide 2-bromopropionique.

Selon un mode de réalisation préféré, le procédé selon l'invention est caractérisé en ce que le catalyseur utilisé est un sel métallique halogéné, de préférence un chlorure ou bromure d'un métal choisi dans le groupe formé par Cu, Ag, Zn, Ni, Pd, Co, Rh, Fe, Ru, Mn, Pt et Au, de préférence CuBr lorsque X=Br.

En outre, le procédé selon l'invention est caractérisé en ce que le monomère aminé utilisé est choisi dans le groupe formé par les cinq structures suivantes:

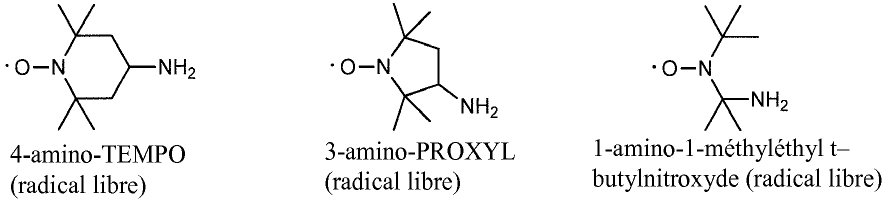

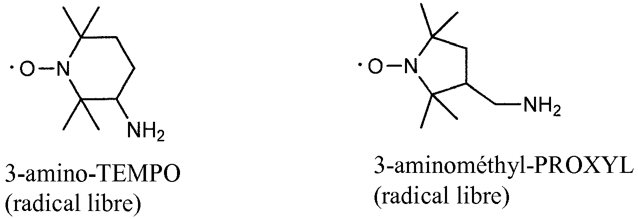

Un mode de réalisation particulièrement préféré est caractérisé en ce que l'on utilise uniquement du Br-C(CH₃)₂-COOH (cas où Y = Ø c'est-à-dire où Y est une simple liaison covalente) et le radical 4-amino-2,2,6,6-tétraméthylpipéridine-1-oxyl (4-amino-TEMPO, radical libre) avec CuBr comme catalyseur.

La présente invention concerne également les poly(alcoxyamine amide)s obtenus ou susceptible d'être obtenus par le procédé selon l'invention.

Ces poly(alcoxyamine amide)s sont également caractérisés en ce qu'ils comportent plusieurs séquences de monomères séparées par plusieurs liaisons thermolabiles.

En particulier, et selon un mode de réalisation particulièrement avantageux les poly(alcoxyamine amide)s selon l'invention sont caractérisés en ce que les liaisons thermolabiles sont de nature chimique identique ou différente et/ou présentent des températures de dissociation identiques ou différentes.

Enfin, la présente invention a également pour objet l'utilisation d'un poly(alcoxyamine amide) selon l'invention pour représenter un message codé ou pour le stockage d'informations dans lequel les différents monomères correspondent à un élément prédéfini dudit code ou des informations à stocker, par exemple un code binaire du type (0, 1), un code multi-naire, une lettre ou un signe du type alphanumérique ou analogue.

Avantageusement, la ou les liaisons thermolabiles permettent, lors d'une étape de chauffage modérée du poly(alcoxyamine amide) au-dessus d'une température de dissociation de ladite ou desdites liaisons, de rompre ladite ou lesdites liaisons et ainsi d'au moins altérer de façon permanente le corps du message codé ou les informations stockées de façon à ce qu'il/elles deviennent au moins partiellement incompréhensible(s) et/ou inexploitable(s) après que le poly(alcoxyamine amide) se soit réorganisé lorsqu'on le refroidit en dessous de la température de dissociation la plus basse.

La présente invention est à présent décrite plus en détail dans les exemples non-limitatifs donnés ci-après.

### Exemple 1: Réaction de l'anhydride de l'acide 2-bromoisobutyrique avec une amine primaire immobilisée sur un support solide.

Dans cet exemple, 0,3 g (0,237 mmol, 1 Eq.) d'une résine commerciale de type Wang-PS, fonctionnalisée par une glycine protégée par un groupement protecteur de type Fmoc (fonctionnalité de 0,79 mmol/g), a été utilisée comme support solide. La résine a été introduite dans une colonne frittée permettant la synthèse en phase solide. Par la suite, la résine a été gonflée par du dichlorométhane pendant 30 minutes sous agitation. Puis, le groupe protecteur Fmoc de la résine a été clivé par un traitement de deux fois dix minutes en présence d'un mélange équivolumique de pipéridine et de dichlorométhane. La formation d'une fonction amine primaire sur la résine a été confirmée par un test colorimétrique de type Kaiser. Ensuite, une solution d'anhydride de l'acide 2-bromoisobutyrique (0,37 g, 5 Eq.) et de N,N-diisopropyléthylamine (0,95 ml) dans 4 ml de diméthylformamide anhydre a été ajoutée dans la colonne et mise en présence de la résine pendant 50 minutes sous agitation mécanique à température ambiante. Après réaction, la résine modifiée a été filtrée et lavée plusieurs fois avec du diméthylformamide puis a été caractérisée par un test colorimétrique de type Kaiser confirmant la disparition quantitative des amines primaires.

### Exemple 2: Réaction de l'anhydride de l'acide 2-bromopropanoïque avec une amine primaire immobilisée sur un support solide.

Dans cet exemple, les conditions de l'exemple 1 ont été utilisées à l'exception de l'anhydride de l'acide 2-bromopropanoïque qui a été remplacé par l'anhydride de l'acide 2-bromoisobutyrique.

### Exemple 3 : Réaction du 4-amino-TEMPO avec un support solide fonctionnalisé par un halogénure d'alkyle

Dans cet exemple, une résine de type Glycine-Wang-PS, fonctionnalisée par un halogénure d'alkyle (c'est-à-dire une résine modifiée obtenue en suivant les conditions expérimentales de l'exemple 1 ou de l'exemple 2) a été utilisée comme support solide. Cette résine a été placée dans une colonne frittée permettant la synthèse en phase solide puis mise en présence d'un mélange de 4-amino-TEMPO (0,12 g, 3 Eq.), de 0,044 g de bromure de cuivre (I) (1,3 Eq.) et de 0,07 ml de tris(2-diméthylaminoéthyl)amine (1,3 Eq.) dans 5 ml de diméthylsulfoxide. La colonne a été fermée par un bouchon à jupe et le milieu réactionnel a été dégazé par bullage d'argon pendant quelques minutes. Ensuite, le mélange réactionnel a été agité pendant 15 minutes sous atmosphère inerte à température ambiante. Après réaction, la résine modifiée a été filtrée puis lavée plusieurs fois avec du diméthylformamide. La résine a été caractérisée par un test colorimétrique de type Kaiser confirmant sa fonctionnalisation par des amines primaires.

### Exemple 4: Synthèse d'un poly(alcoxyamine amide) monodisperse sur un support solide.

Des poly(alcoxyamine amide)s monodisperses de différentes tailles ont été synthétisés sur une résine commerciale de type glycine-Wang-PS. La procédure expérimentale consiste à alterner l'exemple 1 (ou l'exemple 2) et l'exemple 3 un certain nombre de fois afin de construire une chaîne macromoléculaire de longueur désirée. Pour l'étape d'amidification, les conditions expérimentales de l'exemple 1 et de l'exemple 2 peuvent être utilisées de manière interchangeable. Ainsi, l'anhydride de l'acide 2-bromopropanoïque (exemple 1) et l'anhydride de l'acide 2-bromoisobutyrique (exemple 2) peuvent être utilisés dans un ordre prédéfini au cours d'une même synthèse afin de créer des séquences contrôlées de monomères de type binaire. Lorsque la taille requise est atteinte pour le polymère, celui-ci peut être décroché du support en faisant réagir la résine modifiée avec un mélange équivolumique d'acide trifluoroacétique et de dichlorométhane pendant 2 heures. Par la suite, le poly(alcoxyamine amide) est isolé par précipitation dans l'éther diéthylique froid. Les polymères formés ont été caractérisés par RMN du proton et par chromatographie d'exclusion stérique dans le tétrahydrofurane. Dans tous les cas, la RMN du proton a confirmé la formation d'un poly(alcoxyamine amide). De plus, les mesures de chromatographie d'exclusion stérique confirment la formation d'espèces isomoléculaires (les indices de polymolécularité sont compris entre 1,00 et 1,05 suivant les essais). Par exemple, pour un polymère obtenu après 9 étapes successives de synthèse, une masse molaire moyenne en nombre apparente d'environ 1270 g·mol⁻¹ et un indice de polymolécularité de 1,03 ont été déterminés par chromatographie d'exclusion stérique.

### Exemple 5 : Réaction du 4-amino-TEMPO avec un support de polystyrène soluble possédant un halogénure d'alkyle en bout de chaîne.

Dans cet exemple, des chaînes linéaires de polystyrène (*M*ₙ = 4000 g·mol⁻¹, *M*_{w}/*M*ₙ = 1,11), préparées par polymérisation radicalaire contrôlée par transfert d'atome, ont été utilisées comme support soluble. Un des deux bouts de chaîne de ce polystyrène est fonctionnalisé par un atome de brome, l'autre extrémité étant fonctionnalisée par une fonction inerte. 1,8 g de ce support polystyrène soluble (1 Eq.), 0,23 g de 4-amino-TEMPO (3 Eq.), 0,084 g de bromure de cuivre (I) (1,3 Eq.) et de 0,14 ml de tris(2-diméthylaminoéthyl)amine (1,3 Eq.) ont été introduits dans un ballon en verre puis dissous dans un mélange de tétrahydrofurane (2,8 mL) et de diméthylsulfoxide (1,7 mL). Le ballon a été fermé par un bouchon à jupe et le milieu réactionnel a été dégazé par bullage d'argon pendant quelques minutes. Ensuite, le mélange réactionnel a été agité pendant 15 minutes sous atmosphère inerte à température ambiante. Après réaction, le polystyrène modifié a été purifié par précipitation dans le méthanol, lavé puis séché sous vide. Le polymère formé a été caractérisé par RMN du proton et par chromatographie d'exclusion stérique dans le tétrahydrofurane. Ces deux méthodes ont confirmés l'attachement d'une unité de 4-amino-TEMPO sur la chaîne de polystyrène.

### Exemple 6: Réaction de l'anhydride de l'acide 2-bromoisobutyrique avec un support de polystyrène soluble possédant une amine primaire en bout de chaîne.

Dans cet exemple, des chaînes linéaires de polystyrène possédant une amine primaire en bout de chaîne (c'est-à-dire un polymère modifié obtenu en suivant les conditions expérimentales de l'exemple 5) ont été utilisées comme support soluble. 1,75 g de ce support polystyrène soluble (1 Eq.), 0,69 g d'acide 2-bromoisobutyrique (5 Eq.) et 1,75 ml de N,N-diisopropyléthylamine ont été introduits dans un ballon en verre et dissous dans 4mL de dichlorométhane anhydre. Par la suite, le milieu réactionnel a été agité pendant 50 minutes à température ambiante. Après réaction, le polystyrène modifié a été purifié par précipitation dans le méthanol, lavé puis séché sous vide. Le polymère formé a été caractérisé par RMN du proton et par chromatographie d'exclusion stérique dans le tétrahydrofurane. Ces deux méthodes ont confirmé l'attachement d'une unité d'acide 2-bromoisobutyrique sur la chaîne de polystyrène.

### Exemple 7: Synthèse d'un poly(alcoxyamine amide) monodisperse sur un support soluble.

Des poly(alcoxyamine amide)s de différentes tailles ont été synthétisés sur des supports de polystyrène solubles possédant un atome de brome terminal. La procédure expérimentale consiste à alterner l'exemple 5 et l'exemple 6 un certain nombre de fois afin de construire une chaîne macromoléculaire de longueur désirée. Après chaque étape de synthèse, les polymères formés ont été caractérisés par RMN du proton et par chromatographie d'exclusion stérique dans le tétrahydrofurane. Ces deux méthodes d'analyse ont confirmé la formation itérative d'un poly(alcoxyamine amide).

### Exemple 8: Destruction thermique rapide d'un poly(alcoxyamine amide) monodisperse.

Dans cet exemple, 50 mg de poly(alcoxyamine amide) monodisperse (M = 1143 g·mol⁻¹) ont été introduits dans un ballon et dissous dans 8,75 ml d'anisole. Le mélange est chauffé à 125 °C pendant 3 heures. Le polymère formé a été caractérisé par chromatographie d'exclusion stérique dans le tétrahydrofurane. Cette méthode d'analyse a montré la transformation du polymère monodisperse en une espèce polydisperse.

### Exemple 9: Destruction thermique lente d'un poly(alcoxyamine amide) monodisperse.

Dans cet exemple, 60 mg de poly(alcoxyamine amide) monodisperse (M = 1143 g·mol⁻¹) ont été introduits dans un ballon et dissous dans 10,5 ml d'anisole. Le mélange est chauffé à 75 °C pendant 24 heures. Le polymère formé a été caractérisé par chromatographie d'exclusion stérique dans le tétrahydrofurane. Cette méthode d'analyse a montré la transformation du polymère monodisperse en une espèce polydisperse.

Le procédé selon l'invention permet de réaliser des poly(alcoxyamine amide)s présentant typiquement jusqu'à une centaine d'unités de monomères, de préférence de 5 à 100 unités, plus préférentiellement de 5 à 50 unités de monomères et plus préférentiellement encore de 5 à 25 unités de monomères.

Bien entendu, l'invention n'est pas limitée aux modes de réalisations décrits. Des modifications restent possibles, notamment du point de vue de la constitution des divers éléments ou par substitution d'équivalents techniques, sans sortir pour autant du domaine de protection de l'invention.

## Revendications

1. Procédé de synthèse de copolymères ou macromolécules synthétiques de type poly(alcoxyamine amide) dont la nature des monomères et la longueur des séquences de monomères sont contrôlées, dont la chaîne de monomères présente au moins une liaison entre monomères qui soit thermolabile et dont la ou les températures de dissociation sont toutes supérieures à 30 °C, de préférence, supérieures à 50 °C et plus préférentiellement supérieures à 60 °C mais toujours inférieures à 150 °C, de préférence toujours inférieures à 130 °C, **caractérisé en ce qu'**il consiste à faire réagir, sur un support solide ou soluble, un monomère acide sous la forme d'un acide carboxylique monohalogéné de formule X-C(R,R')-Y-COOH avec un monomère amine présentant un groupement radicalaire nitroxyde >N-O^{•} terminal libre et un groupement amine primaire terminal libre -NH₂ ce, en effectuant deux réaction chimiques distinctes et chimiosélectives, l'une consistant à faire réagir les groupements -COOH et -NH₂ précités de manière à obtenir une liaison amide -NH-CO-Y-C(R, R')-, et l'autre consistant à faire réagir le radical -Y-C(R, R')^{•}, obtenu in situ grâce à un catalyseur adapté audit élément halogène X, avec ladite fonction nitroxyde >N-O^{•} afin d'obtenir une liaison de type alcoxyamine -Y-C(R, R')-O-N<, et répéter, de façon alternée, lesdites réactions chimiques précitées autant de fois que nécessaire, en présence de catalyseurs adaptés à ou aux éléments X, avec un nouveau monomère acide halogéné de formule X-C(R,R')-Y-COOH identique ou différent du ou des précédents monomères acides halogénés utilisés ou avec un nouveau monomère amine radicalaire présentant un groupement >N-O^{•} terminal libre et un groupement amine primaire terminal libre -NH₂ identique ou différent du ou des précédents monomères aminés radicalaires, ce jusqu'à l'obtention de la chaîne complète de copolymère voulue., procédé dans lequel R est choisi indépendamment dans le groupe formé par :
H, CH₃, un groupement alkyle présentant 2 à 6 atomes de carbone, éventuellement substitué ou polysubstitué ;
R' étant choisi indépendamment dans le groupe formé par :
H, CH₃, un groupement alkyle présentant 2 à 6 atomes de carbone, éventuellement substitué ou polysubstitué ;
et Y étant choisi indépendamment dans le groupe formé par :
Ø (liaison covalente) et -COO-Z-, où Z est une chaîne hydrocarbonée de 1 à 15 atomes de carbone, linéaire, ramifiée ou cyclique, éventuellement substituée ou polysubstituée, notamment par des groupements choisis dans la liste formée par : -OH, -NH₂, -COOH, -CN, un groupement alcyne, en particulier -C≡C-H, un groupement alcène, -N₃,
- SO₃, ces groupements pouvant être protégés par un ou plusieurs groupements protecteurs adaptés.

2. Procédé selon la revendication 1, **caractérisé en ce que** l'on démarre la synthèse du copolymère sur un support solide muni d'un groupement d'amorce, chimiquement réactif, capable de fixer le premier monomère acide ou amine précités, puis **en ce que** l'on greffe sur ledit premier monomère, au fur et à mesure, les monomères acides et amines complémentaires jusqu'à l'obtention du copolymère voulu.

3. Procédé selon la revendication 2, **caractérisé en ce que en ce que** le support solide présente comme groupement d'amorce un groupement -NH₂, -Br, -Cl, -COOH ou un groupement radicalaire présentant un groupement >N-O^{•} terminal libre, -NH₂, -Br ou -Cl étant préférés.

4. Procédé selon l'une quelconque des revendications 1 à 3, **caractérisé en ce que** pour l'acide carboxylique monohalogéné X-C(R,R')-Y-COOH utilisé, X est indépendamment Br ou Cl.

5. Procédé selon la revendication 4, **caractérisé en ce que** l'acide carboxylique monohalogéné X-C(R,R')-Y-COOH utilisé est obtenu in situ par dissociation, à partir de l'anhydride symétrique dihalogéné correspondant de formule X-C(R,R')-Y-CO-O-CO-Y-C(R,R')-X, de préférence à partir de l'anhydride de l'acide 2-bromoisobutyrique ou de l'anhydride de l'acide 2-bromopropionique,

6. Procédé selon l'une quelconque des revendications 1 à 5, **caractérisé en ce que** le catalyseur utilisé est un sel métallique halogéné, de préférence un chlorure ou bromure d'un métal choisi dans le groupe formé par Cu, Ag, Zn, Ni, Pd, Co, Rh, Fe, Ru, Mn, Pt et Au, de préférence CuBr lorsque X=Br.

7. Procédé selon l'une quelconque des revendications 1 à 6, **caractérisé en ce que** le monomère aminé utilisé est choisi dans le groupe formé par :

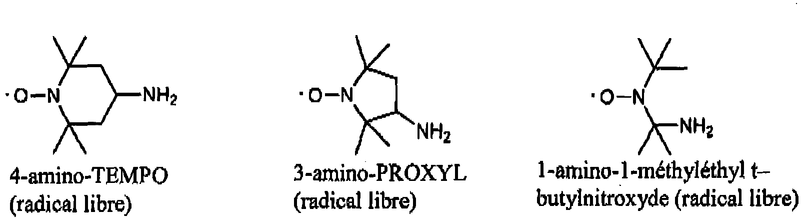

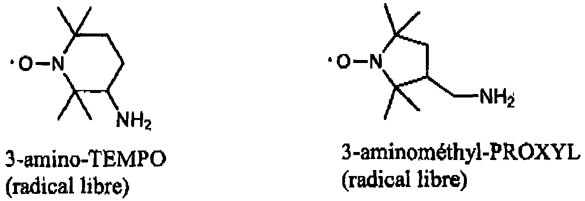

8. Procédé selon l'une quelconque des revendications 1 à 7, **caractérisé en ce que** l'on utilise uniquement du Br-C(CH₃)₂-COOH (Y = Ø) et le radical 4-amino-2,2,6,6-tétraméthylpipéridine-1-oxyl (4-amino-TEMPO, radical libre) avec CuBr comme catalyseur.

9. Poly(alcoxyamine amide) obtenu ou susceptible d'être obtenu par le procédé selon l'une quelconque des revendications 1 à 8.

10. Poly(alcoxyamine amide) selon la revendication 9, **caractérisé en ce qu'**il comporte plusieurs séquences de monomères séparées par plusieurs liaisons thermolabiles.

11. Poly(alcoxyamine amide) selon la revendication 10, **caractérisé en ce que** les liaisons thermolabiles sont de nature chimique identique ou différente et/ou présentent des températures de dissociation identiques ou différentes.

12. Utilisation d'un poly(alcoxyamine amide) selon la revendication 9 pour représenter un message codé ou de stockage d'informations dans lequel les différents monomères correspondent à un élément prédéfini dudit code ou des informations à stocker, par exemple un code binaire du type (0, 1), un code multi-naire, une lettre ou un signe du type alphanumérique ou analogue.

13. Utilisation selon la revendication 12, **caractérisée en ce que** la ou les liaisons thermolabiles permettent, lors d'une étape de chauffage modérée du poly(alcoxyamine amide) au-dessus d'une température de dissociation de ladite ou desdites liaisons, de rompre ladite ou lesdites liaisons et ainsi d'au moins altérer de façon permanente le corps du message codé ou les informations stockées de façon à ce qu'il/elles deviennent au moins partiellement incompréhensible(s) et/ou inexploitable(s) après que le poly(alcoxyamine amide) se soit réorganisé lorsqu'on le refroidit en dessous de la température de dissociation la plus basse.

## Patentansprüche

1. Verfahren zur Synthese von Kopolymeren oder synthetischen Makromolekülen des Typs Poly(alkoxyamin-amid), in denen die Art der Monomere und die Länge der Monomerketten gesteuert sind, in denen die Kette von Monomeren mindestens eine Bindung zwischen Monomeren aufweist, die wärmeunbeständig ist und deren Dissoziationstemperatur(en) alle über 30°C, vorzugsweise über 50°C und weiter bevorzugt über 60°C betragen, jedoch immer unter 150°C, vorzugsweise immer unter 130°C, **dadurch gekennzeichnet, dass** es darin besteht, auf einem festen oder löslichen Substrat ein saures Monomer in Form einer einfach halogenierten Karbonsäure der Formel X-C(R,R')-Y-COOH mit einem Amin-Monomer, das eine freie Stickstoffmonoxidradikal-Endgruppe >N-O^{●} und eine freie primäre Amino-Endgruppe -NH₂ aufweist, reagieren zu lassen, indem zwei verschiedene und chemisch selektive chemische Reaktionen ausgeführt werden, wobei die eine darin besteht, die genannten Gruppen -COOH und -NH₂ derart miteinander reagieren zu lassen, dass sich eine Amidbindung -NH-CO-Y-C(R,R')- ergibt, und die andere darin besteht, das Radikal -Y-C(R,R')^{●}, das in situ durch einen dem genannten Halogen X entsprechenden Katalysator erzeugt wird, mit der genannten Nitroxy-Funktion >N-O^{●} reagieren zu lassen, um eine Bindung vom Alkoxyamin-Typ -Y-C(R,R')-O-N< zu erhalten, und die genannten chemischen Reaktionen abwechselnd in Anwesenheit von dem oder den genannten Halogenen X entsprechenden Katalysatoren mit einem neuen, mit dem/n vorangehend verwendeten sauren, halogenierten Monomer/en identischen oder von ihm verschiedenen, halogenierten sauren Monomer der Formel X-C(R,R')-Y-COOH oder mit einem neuen, mit dem/n vorangehend verwendeten Aminoradikal-Monomer/en identischen oder von ihm verschiedenen Aminoradikal-Monomer, das eine freie Endgruppe >N-O^{●} und eine freie primäre Amino-Endgruppe -NH₂ aufweist, so oft auszuführen, wie nötig, bis die gewünschte vollständige Kopolymerkette erzielt ist, Verfahren, in dem R unabhängig aus der Gruppe gewählt wird, bestehend aus:
H, CH₃, einer eventuell substituierten oder mehrfach substituierten Alkylgruppe mit 2 bis 6 Kohlenstoffatomen,
wobei R' unabhängig aus der Gruppe gewählt wird, bestehend aus:
H, CH₃, einer eventuell substituierten oder mehrfach substituierten Alkylgruppe mit 2 bis 6 Kohlenstoffatomen,
und Y unabhängig aus der Gruppe gewählt wird, bestehend aus:
Ø (kovalente Bindung) und -COO-Z-, worin Z eine Kohlenwasserstoffkette von 1 bis 15 Kohlenstoffatomen ist, gerade, verzweigt oder zyklisch, eventuell substituiert oder mehrfach substituiert, insbesondere mit Gruppen, die aus der folgenden Liste gewählt wurden: -OH, -NH₂, -COOH, -CN, einer Alkingruppe, insbesondere - C=C-H, einer Alkengruppe, -N₃, -SO₃, wobei diese Gruppen durch eine oder mehrere geeignete Schutzgruppen geschützt sein können.

2. Verfahren nach Patentanspruch 1, **dadurch gekennzeichnet, dass** die Synthese des Kopolymers an einem festen Substrat begonnen wird, das mit einer chemisch reaktionsfreudigen Anfangsgruppe versehen ist, die in der Lage ist, das erste genannte saure oder Amin-Monomer zu binden, dann dadurch, dass an das genannte erste Monomer nach und nach die komplementären sauren und Amin-Monomere bis zur Erzielung des gewünschten Kopolymers gebunden werden.

3. Verfahren nach Patentanspruch 2, **dadurch gekennzeichnet, dass** das feste Substrat als Anfangsgruppe eine NH₂-,Br-, Cl-, COOH-Gruppe oder eine Radikalgruppe mit einer freien Endgruppe >N-O^{●} aufweist, wobei -NH₂, -Br oder -Cl bevorzugt werden.

4. Verfahren nach irgendeinem der Patentansprüche 1 bis 3, **dadurch gekennzeichnet, dass** in der einfach halogenierten Karbonsäure X-C(R,R')-Y-COOH X unabhängig für Br oder Cl steht.

5. Verfahren nach Patentanspruch 4, **dadurch gekennzeichnet, dass** die verwendete einfach halogenierte Karbonsäure X-C(R,R')-Y-COOH in situ durch Dissoziation aus dem symmetrischen zweifach halogenierten Anhydrid der Formel X-C(R,R')-Y-CO-O-CO-Y-C(R, R')-X erhalten wird, vorzugsweise aus dem Anhydrid der 2-Brom-isobuttersäure oder dem Anhydrid der 2-Brom-propionsäure.

6. Verfahren nach irgendeinem der Patentansprüche 1 bis 5, **dadurch gekennzeichnet, dass** der verwendete Katalysator ein halogeniertes Metallsalz ist, vorzugsweise ein Chlorid oder Bromid eines aus der Gruppe gewählten Metalls, die aus Cu, Ag, Zn, Ni, Pd, Co, Rh, Fe, Ru, Mn, Pt und Au besteht, vorzugsweise CuBr, wenn X = Br ist.

7. Verfahren nach irgendeinem der Patentansprüche 1 bis 6, **dadurch gekennzeichnet, dass** das verwendete Amin-Monomer aus der folgenden Gruppe gewählt wird:

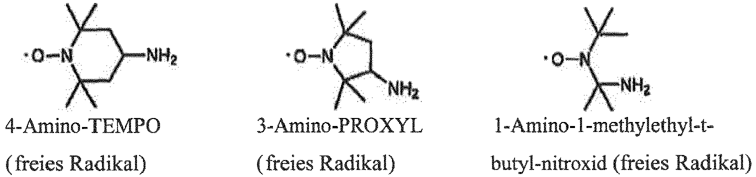

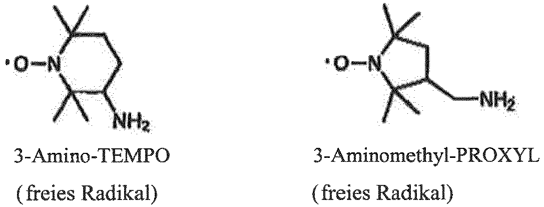

8. Verfahren nach irgendeinem der Patentansprüche 1 bis 7, **dadurch gekennzeichnet, dass** ausschließlich Br-C(CH₃)₂-COOH (Y=Ø) verwendet wird und das Radikal 4-Amino-2,2,6,6-tetramethylpiperidin-1-oxyl (4-Amino-TEMPO, freies Radikal), mit CuBr als Katalysator.

9. Poly(alkoxyamin-amid), hergestellt nach dem Verfahren nach irgendeinem der Patentansprüche 1 bis 8 oder geeignet, nach diesem Verfahren hergestellt zu werden.

10. Poly(alkoxyamin-amid) nach Patentanspruch 9, **dadurch gekennzeichnet, dass** es mehrere Monomerketten aufweist, die durch mehrere wärmeinstabile Bindungen getrennt sind.

11. Poly(alkoxyamin-amid) nach Patentanspruch 10, **dadurch gekennzeichnet, dass** die wärmeinstabilen Bindungen identischer oder unterschiedlicher chemischer Art sind und/oder identische oder verschiedene Dissoziationstemperaturen aufweisen.

12. Verwendung eines Poly(alkoxyamin-amid)s nach Patentanspruch 9 zur Darstellung einer codierten Botschaft oder zur Informationsspeicherung, wobei die verschiedenen Monomere einem festgelegten Element dieses Codes oder der zu speichernden Informationen entsprechen, beispielsweise eines Binärcodes des Typs (0, 1), eines Mehrfachcodes, einem Buchstaben oder einem alphanumerischen Zeichen oder dergleichen.

13. Verwendung nach Patentanspruch 12, **dadurch gekennzeichnet, dass** die wärmeinstabile(n) Bindung(en) ermöglichen, bei mäßiger Erhitzung des Poly(alkoxyamin-amid)s über eine Dissoziationstemperatur der genannten Bindung(en) die genannte(n) Bindung(en) zu lösen und auf diese Weise den Körper der codierten Botschaft oder der gespeicherten Informationen derart mindestens zu beschädigen, dass sie mindestens teilweise unverständlich und/oder unbenutzbar wird/werden, nachdem das Poly(alkoxyamin-amid) sich bei Abkühlung unter die niedrigste Dissoziationstemperatur reorganisiert hat.

## Claims

1. Method for synthesising synthetic macromolecules or copolymers of the poly(alkoxyamine amide) type, in which the monomer type and the length of the monomer sequences are controlled, in which the monomer chain has at least one bond between monomers that is thermolabile, and in which the dissociation or separation temperature(s) is/are all greater than 30° C, preferably greater than 50° C, and more preferably greater than 60° C, but always less than 150° C, preferably always less than 130° C, **characterised in that** it consists in reacting, on a soluble or solid substrate, an acid monomer in the form of a monohalogenated carboxylic acid of formula X-C(R,R')-Y-COOH with an amine monomer that has a free terminal nitroxide >N-O^{●} free-radical group and a free terminal primary amine group -NH₂, by carrying out two chemically selective and separate chemical reactions: one consisting of reacting the aforementioned groups -COOH and
-NH₂ in such a way as to obtain an amide bond -NH-CO-Y-C(R, R')-, and the other consisting of reacting the radical -Y-C(R, R')^{●}, obtained in situ using a catalyst adapted to said halogen element X, with said nitroxide >N-O^{●} group so as to obtain an alkoxyamine-type bond -Y-C(R, R')-O-N<, and repeating, alternately, said aforementioned chemical reactions as many times as necessary, in the presence of catalysts adapted to the element(s) X, with a new halogenated acid monomer of formula X-C(R, R')-Y-COOH that is identical to or different from the preceding halogenated acid monomers that are used or with a new free-radical amine monomer that has a free terminal >N-O^{●} group and a free terminal primary amine group -NH₂ that is identical to or different from the preceding free-radical amine monomers until the desired complete copolymer chain is obtained, method in which R is selected independently from the group that is formed by:
H, CH₃, an alkyl group that has 2 to 6 carbon atoms, optionally substituted or polysubstituted;
with R' being selected independently from the group that is formed by:
H, CH₃, an alkyl group that has 2 to 6 carbon atoms, optionally substituted or polysubstituted;
and Y being selected independently from the group formed by:
Ø (covalent bond) and -COO-Z-, where Z is a hydrocarbon chain with 1 to 15 carbon atoms, linear, branched or cyclic, optionally substituted or polysubstituted, in particular by groups that are selected from the list that is formed by: -OH, -NH₂, -COOH, -CN, an alkyne group, in particular -C≡C-H, an alkene group, -N₃, -SO₃, with these groups being able to be protected by one or more suitable protective groups.

2. Method according to claim 1, **characterised in that** the synthesis of the copolymer is initiated on a solid substrate equipped with a chemically reactive primer group, capable of fixing the aforementioned first amine or acid monomer, and then wherein the complementary amine and acid monomers are grafted onto said first monomer, on a rolling basis, until the desired copolymer is obtained.

3. Method according to claim 2, **characterised in that** the solid substrate has as a primer group a group -NH₂, -Br, -Cl, -COOH, or a free-radical group that has a free terminal >N-O^{●} group, -NH₂, -Br, or -Cl being preferred.

4. Method according to any of claims 1 to 3, **characterised in that** for the monohalogenated carboxylic acid X-C(R, R')-Y-COOH used, X is independently Br or Cl.

5. Method according to claim 4, **characterised in that** the monohalogenated carboxylic acid X-C(R, R')-Y-COOH that is used is obtained in situ by separation, from the corresponding dihalogenated symmetrical anhydride of formula X-C(R, R')-Y-CO-O-CO-Y-C(R, R')-X, preferably from 2-bromoisobutyric acid anhydride or 2-bromoproprionic acid anhydride.

6. Method according to any of claims 1 to 5, **characterised in that** the catalyst used is a halogenated metal salt, preferably a chloride or bromide of a metal that is selected from the group that is formed by Cu, Ag, Zn, Ni, Pd, Co, Rh, Fe, Ru, Mn, Pt and Au, preferably CuBr when X=Br.

7. Method according to any of the preceding claims 1 to 6, **characterised in that** the amine monomer that is used is selected from the group that is formed by:

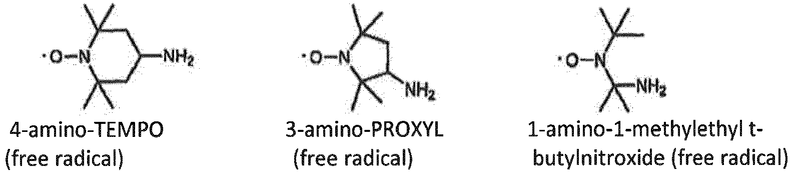

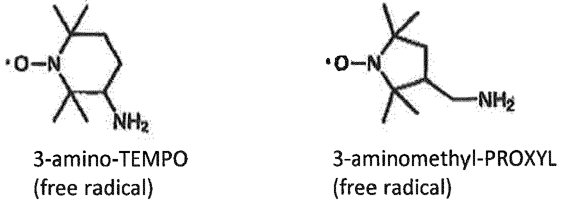

8. Method according to any of claims 1 to 7, **characterised in that** only Br-C(CH₃)₂-COOH (Y=Ø) and the radical 4-amino-2,2,6,6-tetramethylpiperidine-1-oxyl (4-amino-TEMPO, free radical) are used with CuBr as catalyst.

9. Poly(alkoxyamine amide) that is obtained or can be obtained by the method according to any of claims 1 to 8.

10. Poly(alkoxyamine amide) according to claim 9, **characterised in that** it comprises multiple sequences of monomers separated by multiple thermolabile bonds.

11. Poly(alkoxyamine amide) according to claim 10, **characterised in that** the thermolabile bonds are chemically identical or different in nature and/or have identical or different separation temperatures.

12. Use of a poly(alkoxyamine amide) according to claim 9 for making a coded message or data store, in which the different monomers correspond to a predefined element of said code or data to be stored, for example a binary code of the type (0, 1), a multinary code, a letter or alphanumeric symbol or the like.

13. Use according to claim 12, **characterised in that** the thermolabile bond(s) make(s) it possible, during a moderate heating stage of the poly(alkoxyamine amide) above a separation temperature of said bond(s), to break said bond(s) and thus at least to alter permanently the body of the coded message or the stored data in such a way that they become at least partially incomprehensible and/or unusable after the poly(alkoxyamine amide) is reorganised when it is cooled below the lowest separation temperature.
